# EUROPÄISCHE PATENTSCHRIFT

(11) **EP 3 192 374 B1**
(45) Veröffentlichungstag und Bekanntmachung des Hinweises auf die Patenterteilung: **07.04.2021**
(21) Anmeldenummer: 17151125.6
(22) Anmeldetag: 12.01.2017
(51) Int. Cl.: A23C 3/033, A23C 3/037, A23C 3/03

(54) **VERFAHREN ZU HERSTELLUNG VON HALTBARER MILCH**
PROCESS FOR THE PRODUCTION OF EXTENDED SHELF LIFE MILK
PROCÉDÉ DE PRODUCTION DE LAIT DE LONGUE CONSERVATION

(30) Priorität: 18.01.2016 DE 102016200571
(43) Veröffentlichungstag der Anmeldung: 19.07.2017
(73) Patentinhaber: DMK Deutsches Milchkontor GmbH, 27404 Zeven (DE)
(72) Erfinder: HINRICHS, Jörg, 70599 Stuttgart (DE); STOECKEL, Marina, 70597 Stuttgart (DE)
(74) Vertreter: Fabry, Bernd

(56) Entgegenhaltungen:
- WO-A1-87/05469
- WO-A1-98/41102
- CN-A- 103 454 301
- RUPESH S. CHAVAN ET AL: "UHT Milk Processing and Effect of Plasmin Activity on Shelf Life: A Review", COMPREHENSIVE REVIEWS IN FOOD SCIENCE AND FOOD SAFETY, Bd. 10, Nr. 5, 22. August 2011 (2011-08-22), Seiten 251-268, XP055357803, US ISSN: 1541-4337, DOI: 10.1111/j.1541-4337.2011.00157.x
- NEWSTEAD D F ET AL: "Plasmin activity in direct-steam-injection UHT-processed reconstituted milk: Effects of preheat treatment", INTERNATIONAL DAIRY JOURNAL, ELSEVIER APPLIED SCIENCE, BARKING, GB, Bd. 16, Nr. 6, 1. Juni 2006 (2006-06-01), Seiten 573-579, XP024963357, ISSN: 0958-6946, DOI: 10.1016/J.IDAIRYJ.2005.11.011 [gefunden am 2006-06-01]
- H.J. Dlg Prof Dr Buckenhüskes ET AL: "ESL milk production", DLG-Expert report 4/2014, 1. Januar 2015 (2015-01-01), Seiten 1-6, XP055358369, Frankfrurt, Germany Gefunden im Internet: URL:http://2015.dlg.org/fileadmin/download s/food/Expertenwissen/Ernaehrung/e_2014_4_ Expertenwissen_ESL.pdf [gefunden am 2017-03-23]

## Beschreibung

### GEBIET DER ERFINDUNG

Die Erfindung befindet sich auf dem Gebiet der Molkereiprodukte und betrifft ein Verfahren zur Herstellung einer haltbaren Milch mit verbesserter Stabilität.

### STAND DER TECHNIK

Bei der im Handel erhältlichen Frischmilch handelt es sich um pasteurisierte Milch, die in der Regel für einige Tage im Kühlregal haltbar ist. Neben der traditionell hergestellten pasteurisierten Milch gibt es schon seit Längerem eine im Kühlregal länger haltbare Milch, die sogenannte ESL-Milch (ESL steht für Extended Shelf Life). Die Haltbarkeit dieser ESL-Milch beträgt in der Regel bis zu 30 Tagen im gekühlten Zustand in der geschlossenen Verpackung.

Schließlich gibt es neben der traditionell hergestellten und der ESL-Milch auch noch die so genannte haltbare oder H-Milch. Diese wird üblicherweise mittels eines UHT Verfahrens erhitzt (UHT steht für ultrahochtemperiert). Sie ist im verschlossenen Zustand mehrere Wochen bis Monate bei Raumtemperatur haltbar.

Die Pasteurisierung von traditionell hergestellter Milch erfolgt in der Regel bei einer Temperatur zwischen 72 °C und 75 °C über einen Zeitraum von 15 bis 30 Sekunden ESL-Milch wird hingegen bei 127 °C für einige Sekunden erhitzt. Bei der Ultrahocherhitzung wird in der Regel 3 s lang bei einer Temperatur oberhalb von 140 °C behandelt und sofort wieder auf Raumtemperatur heruntergekühlt.

Ziel der bekannten Erhitzungsverfahren zur Bereitstellung von H-Milch ist zum einen die Reduktion der Keimzahl in der zu verarbeitenden Rohmilch zum Erreichen kommerzieller Sterilität. Zum anderen soll das milcheigene Enzym Plasmin ausreichend inaktiviert werden, so dass es zu keinen Qualitätsbeeinträchtigungen, insbesondere im Hinblick auf die geschmacklichen Eigenschaften der Milch, kommt.

Laut H.G. Kessler "Lebensmittel- und Bioverfahrenstechnik - Molkereitechnologie" Verlag A. Kessler, München, S. 140 (2006**),** sollte bei der H-Milch Herstellung für die Erzielung kommerzieller Sterilität eine Inaktivierung bakterieller Sporen um 9 Zehnerpotenzen erzielt werden. Dies kann durch eine Erhitzung bei oberhalb von 110 °C und die entsprechenden Haltezeiten erreicht werden.

Verschiedene andere Autoren (z. B. D. F. Newstead et al., International Dairy Journal 16 (2006), 573-579**;** A. J. von Asselt et al. in International Dairy Journal 18 (2008), 531-538**;** WO 2010 085957 A2 ; Valentin M. Rauh et al. in International Dairy Journal 38 (2014), 199-207**)** beschreiben die Herstellung von H-Milch durch direkte Dampfbehandlung bei Temperaturen von 140 bis 180 °C bei Haltezeiten von 0,2 bis 4 s. Alternativ kann eine indirekte Erhitzung gewählt werden.

Wie sich herausstellte, zeigt Plasmin bei thermischer Behandlung eine gebrochene Reaktion. So wurde berichtet, dass die Inaktivierung von Plasmin bei Temperaturen unterhalb von 90 °C stark temperaturabhängig ist, wohingegen sie bei Temperaturen oberhalb von 95 °C zeitabhängig ist (T. Saint Denis et al. in Lait 81 (2001), 715-729**;** A. J. van Asselt et al. in International Dairy Journal 18 (2008), 531-538**).**

Das Dokument "Comprehensive Reviews in Food Science and Food Safety", 2011, 10 (5), Seiten 251-268 gibt einen Überblick über die Rolle oder Wirkung von Plasmin bei der Gelbildung von UHT-Milk während der Lagerung.

Das Dokument "International Dairy Journal", 2005, 16 (6), Seiten 573-579 offenbart eine Untersuchung über die Effekte einer thermischen Behandlung vor dem UHT-Verfahren (140 °C für 3 Sekunden) auf die von Plasmin verursachte Proteolyse. Es stellte sich heraus, dass eine thermische Behandlung bei 90 °C für 30-60 Sekunden erforderlich ist, um die Plasmin-Aktivität zu inhibieren.

Das Dokument CN 103 454 301 A offenbart ein Verfahren zur Bestimmung der thermischen Stabilität von Proteinen eines Milchpulvers. Das Verfahren umfasst folgende Schritte: i) Bereitstellung einer wässrigen Lösung des zu untersuchenden Milchpulvers, ii) Erhitzung der Lösung bei 50-90 °C für 5-10 Minuten, und iii) 2. Erhitzung bei 120-150 °C für 5-15 Minuten.

Das Dokument DLG-Expert Report 4/2014, "ESL Milk Production" gibt einen Überblick über die Herstellung von ESL-Milch.

Die Aufgabe der vorliegenden Erfindung hat daher darin bestanden, ein neues Verfahren zur Herstellung von haltbarer Milch einer neuen Qualität mithilfe von Erhitzungsschritten bereitzustellen, das zum einen eine ausreichende Keimreduzierung und eine ausreichende Inaktivierung milcheigener Enzyme bewirkt, und zum anderen eine lagerstabile haltbare Milch bereitstellt, welche auch nach längeren Lagerzeiten noch gute optische und Geschmackseigenschaften besitzt. Die erhaltene haltbare Milch soll bei Raumtemperatur eine Lagerstabilität von mehreren Monaten, insbesondere von 6 bis 12 Monaten besitzen.

In diesem Zusammenhang sollten bezogen auf die eingesetzte Rohmilch vorzugsweise auch noch folgende Spezifikationen erreicht werden:
- Inaktivierung von Sporen um mindestens 9 log
- Inaktivierung von Plasmin um mindestens 3 log
- Inaktivierung der Pseudomonas-Peptidasen um mindestens 1 log
- Thiaminverlust weniger als 15%.

### BESCHREIBUNG DER ERFINDUNG

Die Erfindung betrifft ein Verfahren zur Herstellung von haltbarer Milch mit einer Stabilität bei Raumtemperatur von 6 bis 12 Monaten umfassend die folgenden Schritte:
(a) Homogenisierung einer Rohmilch,
(b) Erwärmung der zu behandelnden Rohmilch über einen Zeitraum von etwa 2 bis etwa 4 Minuten auf eine Temperatur im Bereich von 94 bis 96 °C, und
(c) Erwärmung der behandelten Milch aus Schritt (b) über einen Zeitraum von etwa 50 bis etwa 400 Sekunden auf eine Temperatur im Bereich von etwa 125 bis 135 °C
wobei die beiden Schritte (b) und (c) unmittelbar nacheinander und beide durch indirekte Erwärmung durchgeführt werden.

Die nach dem erfindungsgemäßen Verfahren erhaltene oder erhältlich haltbare Milch entsprechen der vorgegebenen Spezifikation und besitzen unter anderem den Vorteil, dass sie mit guten Produkteigenschaften und einer Lagerstabilität bei Raumtemperatur/Umgebungstemperatur über mehrere Monate, insbesondere bis zu 1 Jahr, bereitgestellt werden kann. Auch nach Ablauf dieser vergleichsweise langen Lagerzeiten sind negative Produktveränderungen nicht eingetreten oder nur in einem sehr geringen akzeptablen Ausmaß. Dies macht die erfindungsgemäß hergestellte haltbare Milch in besonderer Weise auch für den Export in ferne Länder und Regionen (mit langen Transport- und Lagerzeiten) geeignet. Die Kombination der beiden Wärmebehandlungsschritte unter den angegebenen ganz speziellen Zeit- und Temperaturbedingungen ist offensichtlich in besonderer Weise auf die Kinetik abgestimmt, welche die Inaktivierung der in der zu behandelnden Milch enthaltenen Enzymsysteme steuert. Die Aktivität dieser Enzymsysteme wird durch das erfindungsgemäße Verfahren so weit vermindert, dass ein enzymatischer Verderb der Milch, der beispielsweise in einem bitteren Geschmack der Milch resultiert, während einer Lagerung von mehreren Monaten, bis hin zu 1 Jahr, ausgeschlossen werden kann. Dies lässt sich dadurch erklären, dass die milchoriginäre Peptidase Plasmin im ersten und zweiten Wärmebehandlungsschritt inaktiviert wird sowie eventuell vorhandene bakterielle Peptidasen im zweiten Wärmebehandlungsschritt.

Weiter kann das erfindungsgemäße Verfahren in seinen bevorzugten Ausführungsformen vollständig kontinuierlich durchgeführt werden, so dass die Herstellbarkeit der Milch einfacher und kostengünstiger erfolgen kann. Dies stellt zusammen mit der vergleichsweise langen Haltbarkeit und der hohen Produktqualität eine besondere Kombination an Vorteilen dar.

### WÄRMEBEHANDLUNG

Unter "Milch" soll bei dieser Patentanmeldung das von tierischen Säugetieren erhaltene menschliche Nahrungsmittel verstanden werden. Bekanntlich handelt es sich bei Milch um eine kolloidale Dispersion von Proteinen, Zuckern und Fetten in Wasser. Insbesondere soll der Begriff "Milch" in Übereinstimmung mit der Milchverordnung der Europäischen Union als Synonym für "Kuhmilch" verstanden werden.

"Rohmilch" ist dementsprechend unbehandelte Milch, das heißt Milch, die weder einer Erwärmung über 40°C noch einer Mikrofiltration unterworfen wurde. Demgegenüber ist "haltbare Milch" Milch, die durch Erhitzungsverfahren lagerstabil bei Raumtemperatur gemacht wurde.

Bei einem "indirekten Erhitzungsverfahren" wird die Milch für die entsprechende Wärmebehandlung beispielsweise durch heiße Röhren oder Platten (in der Regel aus Edelstahl) geführt und damit auf die entsprechende Zieltemperatur gebracht. Bei "direkten Erhitzungsverfahren" wird die notwendige Temperatur beispielsweise über eine Infusion oder Injektion von Wasserdampf erreicht. Nach der entsprechenden Haltezeit wird der Wasserdampf in einem nächsten Schritt der behandelten Milch sofort wieder entzogen.

Von einem "kontinuierlichen Verfahren" spricht man in der Verfahrenstechnik, wenn dieser technische Prozess, im vorliegenden Fall die Wärmebehandlung, kontinuierlich, das heißt ohne Unterbrechungen abläuft. Für solche kontinuierlichen Verfahren werden in der Regel rohrartige Apparaturen und Reaktoren verwendet. Im Gegensatz dazu handelt es sich bei Chargenprozessen oder Batchprozessen um diskontinuierliche Verfahren, bei denen in mehr oder weniger abgeschlossenen Behältern nur bestimmte Mengen der entsprechenden Substanz behandelt werden können. In der Regel werden kontinuierliche Prozesse bei der Verarbeitung großer Produktmengen bevorzugt, da das aufwendige Befüllen, Entleeren, Reinigen und Wiederbefüllen der entsprechenden Behälter weitgehend entfallen kann.

Weiter soll bei dieser Patentanmeldung unter dem Begriff der "Raumtemperatur" oder "Umgebungstemperatur" derjenige Temperaturbereich verstanden werden, bei dem haltbare Milch ohne äußere Kühlung transportiert oder gelagert wird. Hier wird es sich üblicherweise um einen Temperaturbereich zwischen 15°C und 35°C handeln, wobei die obere Temperaturgrenze gegebenenfalls noch um einige Grad Celsius überschritten werden kann. Dementsprechend ist der Begriff der "Lagerstabilität" derjenige Zeitraum, über den die haltbare Milch innerhalb des beschriebenen Temperaturbereichs gelagert werden kann, ohne dass die Qualität, das heißt die Eigenschaften der haltbaren Milch, in nennenswertem Umfang beeinträchtigt wird.

Erfindungsgemäß umfasst ein Verfahren zur Herstellung von haltbarer Milch, neben anderen Verfahrensschritten, insbesondere zur Vorbehandlung oder Nachbehandlung der Milch, mindestens zwei Wärmebehandlungsschritte für die zu behandelnde Milch. Bei diesen beiden Schritten handelt es sich um einen ersten Wärmebehandlungsschritt in einem kontinuierlichen oder einem diskontinuierlichen Verfahren mit einem indirekten Erhitzungsverfahren, der bei einer Temperatur zwischen 94°C und 96°C über einen Zeitraum von etwa 2 bis etwa 4 Minuten durchgeführt wird. Weiter umfasst das Verfahren einen zweiten Wärmebehandlungsschritt, der in einem kontinuierlichen Verfahren bei einer Temperatur zwischen 125 und 135°C über einen Zeitraum zwischen etwa 50 bis etwa 400 Sekunden durchgeführt wird.

Der erste Wärmebehandlungsschritt und der zweite Wärmebehandlungsschritt werden unmittelbar hintereinander durchgeführt. Dann kommen die im Folgenden noch beschriebenen Vorteile des erfindungsgemäßen Verfahrens besonders gut zum Tragen.

Im ersten Wärmebehandlungsschritt werden die gewählte Temperatur und die gewählte Haltezeit bei dieser Temperatur in der Regel so aufeinander abgestimmt, dass die einleitend angesprochene Inaktivierung milcheigener Enzyme, insbesondere des Enzyms Plasmin in ausreichendem Umfang erfolgt. Diese Inaktivierung/Reduktion wird in der Biologie bekanntlich in so genannten log-Stufen angegeben. Die Reduktion um 1 log-Stufe bedeutet eine Reduktion von 90 %, von 2 log-Stufen um 99 und um 3 log-Stufen um 99,9 % (usw.). Im ersten Wärmebehandlungsschritt der Erfindung wird in der Regel eine Inaktivierung milcheigener Enzyme, insbesondere von Plasmin um (mindestens) 3 log-Stufen angestrebt.

Vorzugsweise resultiert die angesprochene Auswahl von Temperatur und Haltezeit im ersten Wärmebehandlungsschritt darin, dass bei einer niedrigeren Temperatur im angegebenen Temperaturbereich eine längere Haltezeit im angegebenen Zeitraum gewählt wird, und bei höherer Temperatur entsprechend eine kürzere Haltezeit.

Weiter wird der erste Wärmebehandlungsschritt bei der Erfindung über einen Zeitraum zwischen 2 und 4 Minuten durchgeführt.

Bei weiter bevorzugten Ausführungsformen des erfindungsgemäßen Verfahrens wird der zweite Wärmebehandlungsschritt bei einer Temperatur zwischen 125 und 130°C durchgeführt.

Innerhalb des genannten Zeitraums von 50 bis 400 Sekunden können die Haltezeiten im zweiten Wärmebehandlungsschritt variiert werden, insbesondere in Abhängigkeit von der Zusammensetzung oder Qualität der im erfindungsgemäßen Verfahren behandelten Rohmilch. Sind beispielsweise in der Rohmilch keine Pseudomonas-Peptidasen vorhanden, so kann der zweite Wärmebehandlungsschritt im angegebenen Temperaturbereich zwischen 125 und 135°C beispielsweise über einen Zeitraum zwischen 60 und 120 Sekunden durchgeführt werden. Damit kann in der Regel eine Inaktivierung vorhandener Sporen um mindestens 9 log und eine Inaktivierung von Plasmin um mindestens 3 log erreicht werden, bei einem Thiaminverlust von weniger als 10%.

Wird im erfindungsgemäßen Verfahren eine Rohmilch mit einer Pseudomonaden-Belastung eingesetzt, kann der zweite Wärmebehandlungsschritt mit den genannten Temperaturen zwischen 125 und 135°C vorzugsweise über einen Zeitraum zwischen 100 und 400 Sekunden durchgeführt werden. Mit solchen Verfahrensführungen lässt sich bei einer Inaktivierung von Sporen um mindestens 9 log und bei einer Inaktivierung von Plasmin um mindestens 3 log eine Inaktivierung der Pseudomonas-Peptidasen um (mindestens) 1 log erreichen, wobei der Thiaminverlust weniger als 15% beträgt.

Höhere Thiaminverluste bis 20% sind im Endprodukt der haltbaren Milch im Falle starker Belastungen mit Peptidasen von *Pseudomonas* ebenfalls akzeptierbar.

Erfindungsgemäß lässt sich der erste Wärmebehandlungsschritt in einem kontinuierlichen Verfahren oder auch in einem Batch-Verfahren durchführen, wobei es bevorzugt ist, ein kontinuierliches Verfahren einzusetzen.

Erfindungsgemäß lässt sich der zweite Wärmebehandlungsschritt mit einem direkten Erhitzungsverfahren oder einem indirekten Erhitzungsverfahren durchführen, wobei der Einsatz eines indirekten Erhitzungsverfahrens bevorzugt ist.

In Übereinstimmung mit den bisherigen Ausführungen ist ein bevorzugtes Verfahren nach der Erfindung dadurch gekennzeichnet, dass der erste Wärmebehandlungsschritt mit einem indirekten Erhitzungsverfahren bei einer Temperatur zwischen 94 und 96°C über einen Zeitraum zwischen 2 und 4 Minuten durchgeführt wird. Dabei erfolgt der erste Wärmebehandlungsschritt vorzugsweise in einem kontinuierlichen Verfahren. Weiter wird bei einem solchen erfindungsgemäßen Verfahren, insbesondere unmittelbar anschließend, der zweite Wärmebehandlungsschritt in einem kontinuierlichen Verfahren bei einer Temperatur zwischen 125 und 130°C über einen Zeitraum zwischen 100 und 400 s durchgeführt. Dabei kommt vorzugsweise ein indirektes Erhitzungsverfahren zum Einsatz.

Weiter handelt es sich bei der zu behandelnden Milch, die im erfindungsgemäßen Verfahren eingesetzt wird, insbesondere um Rohmilch mit einem Keimgehalt von maximal 100.000 KbE. Die Abkürzung "KbE" steht hier für *koloniebildende Einheiten.* Dies ist eine Größe für die Quantifizierung von Mikroorganismen, und damit ein Maß für die Belastung der zu behandelnden Milch mit solchen Mikroorganismen.

In Weiteren ist den beiden erfindungsgemäßen Wärmebehandlungsschritten ein Homogenisierungsschritt vorgeschaltet, bei dem bekanntlich die in der Milch enthaltenen Fetttröpfchen unter hohem Druck (in der Regel 150 bis 300 bar) verkleinert werden, um ein Aufrahmen der Milch zu verhindern. Dieses Homogenisieren kann septisch oder aseptisch erfolgen.

Auch Filtrationsschritte können in das erfindungsgemäße Verfahren an geeigneter Stelle integriert werden.

### BEISPIEL 1

Für die Durchführung des erfindungsgemäßen Verfahrens und zweier Vergleichsverfahren wurde eine Rohmilch (Kuhmilch) mit einem Keimgehalt von ≤ 100.000 KbE bereitgestellt. Es wurde eine sehr frische Rohmilch verwendet, um das Vorhandensein bakterieller Peptidasen in der Rohmilch auszuschließen. Die Milch enthielt somit hauptsächlich Plasmin als milchoriginäre Peptidase, die in der Lage ist, das finale Milchprodukt zu verderben.

Die Rohmilch wurde zunächst von groben Schmutzpartikeln mittels Separator befreit, in einem Plattenwärmetauscher auf ca. 60 °C erwärmt und homogenisiert (zweistufig 250 bar / 50 bar), und dann in einem kontinuierlichen Verfahren in einem ersten Schritt bei einer Temperatur von 95°C über einen Zeitraum von 142 s indirekt wärmebehandelt. Hierfür wurde ein Plattenwärmetauscher mit angeschlossenem Heißhalter verwendet. Direkt anschließend wurde die Milch in einem kontinuierlichen Verfahren in einem zweiten Schritt bei einer Temperatur von 127°C über einen Zeitraum von 142 s wärmebehandelt. Für diesen zweiten Wärmebehandlungsschritt kam ein Röhrenwärmetauscher im Gegenstromverfahren mit angeschlossenem Heißhalter zum Einsatz (indirekte Erhitzung). Nach der Heißhaltung wurde die Milch auf 20 °C abgekühlt und aseptisch abgefüllt.

Zum Vergleich des Produkts, das nach dem erfindungsgemäßen Verfahren hergestellt ist, mit dem Stand der Technik, wurde aus der gleichen Charge Rohmilch H-Milch (UHT-Milch) sowohl mit einem indirekten Erhitzungsverfahren als auch mit einem direkten Erhitzungsverfahren hergestellt. Bei Einsatz des indirekten Erhitzungsverfahrens wurde die Rohmilch über einen Zeitraum von 6,9 s bei einer Temperatur von 140,5°C behandelt. Bei dem direkten Verfahren erfolgte eine Behandlung der Rohmilch bei 143°C über einen Zeitraum von 3,3 s.

Dann wurden die drei Produkte an haltbarer Milch sensorisch und optisch begutachtet. Die Ergebnisse dieser Begutachtung sind in der nachfolgenden Tabelle 1 dargestellt.

Bei der genannten Begutachtung wird davon ausgegangen, dass der Verderb von haltbarer Milch, der durch proteolytische Enzyme verursacht wird, die Eigenschaften der Milch in der folgenden Reihenfolge negativ beeinflusst: Bitterkeit - Partikelbildung - feste Rahmschicht - Sediment - Gelbildung. Dementsprechend wurde diese Abfolge in die Begutachtung mit einbezogen.

Aus **Tabelle 1** ist zu entnehmen, dass die Milch nach der Erfindung sensorisch ähnlich beurteilt wurde wie die mit einem indirekten Erhitzungsverfahren bereitgestellte UHT-Milch. Die Tatsache, dass die mit einem direkten Erhitzungsverfahren bereitgestellte UHT-Milch etwas beliebter war, ist auf deren geringeren Kochgeschmack zurückzuführen, welcher durch die weniger lange und damit weniger intensive Erhitzung bedingt ist. Die Milch nach der Erfindung war über einen Lagerzeitraum von 5 Monaten stabil und wies nur geringe optische Veränderungen auf, ähnlich zu der bei wesentlich höheren Temperaturen er-hitzten UHT-Milch. Mit einem direkten Erhitzungsverfahren bereitgestellte UHT-Milch war bereits nach einer Lagerzeit von 5 Monaten (bei 20°C) verdorben.

**Tabelle 1**

| Bewertung von UHT und ESL-Milch | | | |
|---|---|---|---|
| | **UHT Milch indirekt erhitzt** | **UHT Milch direkt erhitzt** | **Erfindungsgemäße Milch** |
| Erhitzungsbedingungen | 140,5 °C, 6,9 s | 143 °C, 3,3 s | 95 °C, 142 s |

| ***Sensorische Bewertung nach 1 Monat Lagerung (20 °C)*** | | | |
|---|---|---|---|
| Beliebtheit¹⁾ | 1,8 | 2,3 | 1,8 |
| Kochgeschmack²⁾ | 2,0 | 1,9 | 2,1 |

| ***Optische Bewertung nach 1,5 Monaten Lagerung (20 °C)*** | | | |
|---|---|---|---|
| Partikel bildung | Keine | Keine | keine |
| Rahmschicht (Dicke) | 4 mm (nicht fest) | 3 mm (nicht fest) | 5 - 6 mm (nicht fest) |
| Sediment | keines | Keines | keines |
| Gelbildung | keine | Keine | keine |
| Konsistenz | einwandfrei | schmierig | einwandfrei |

| ***Sensorische Bewertung nach 5 Monaten Lagerung (20 °C)*** | | | |
|---|---|---|---|
| Beliebtheit¹⁾ | 1,3 | 1,5 | 1,7 |
| Kochgeschmack²⁾ | 2,4 | 2,5 | 2,1 |

| ***Optische Bewertung nach 5 Monaten Lagerung (20 °C)*** | | | |
|---|---|---|---|
| Partikel bildung | keine | vorhanden | keine |
| Rahmschicht (Dicke) | 1 mm (nicht fest) | 7 - 10 mm (fest) | 1 mm (nicht fest) |
| Sediment | keines | vorhanden | keines |
| Gelbildung | Keine | vorhanden | keine |
| Konsistenz | einwandfrei | schmierig | einwandfrei |

| | | | |
|---|---|---|---|
| 1) Skala 1-3: (1) = wenig bis (3) = sehr beliebt 2) Skala 1 bis 3: (1) gering bis (3) starker Kochgeschmack | | | |

Damit weist die nach dem erfindungsgemäßen Verfahren hergestellte haltbare Milch alle Eigenschaften auf, die eine haltbare Milch nach der Aufgabenstellung der Erfindung aufweisen soll. Auch nach längeren Lagerzeiten besitzt die bei vergleichsweise niedrigen Temperaturen haltbar gemachte Milch noch gute optische Eigenschaften und Geschmackseigenschaften und erweist sich Standard-UHT Milch als deutlich überlegen. Eine Lagerung bei Raumtemperatur/Umgebungstemperatur ist über Zeiträume von mehreren Monaten bis hin zu 12 Monaten ohne weiteres möglich.

Offensichtlich wird bei der Erfindung die milchoriginäre Peptidase Plasmin durch die Erhitzungsbedingungen im ersten und zweiten Wärmebehandlungsschritt zuverlässig inaktiviert. Bei Vorhandensein von bakteriellen Peptidasen können diese ebenfalls durch die Erhitzungsbedingungen im zweiten Wärmebehandlungsschritt reduziert werden. Diese Erhitzungsbedingungen mit vergleichsweise langen Haltezeiten bei vergleichsweise niederen Temperaturen sind also auf die Inaktivierungskinetik der beteiligten Enzymsysteme sehr gut ausgelegt. Die Aktivität dieser Enzymsysteme ist dadurch so weit vermindert, dass ein enzymatischer Verderb, der zunächst zu Bitterkeit und später zu den weiteren genannten negativen Eigenschaften der Milch führt, während einer Lagerung von bis zu 1 Jahr ausgeschlossen werden kann

## Patentansprüche

1. Verfahren zur Herstellung von haltbarer Milch mit einer Stabilität bei Raumtemperatur von 6 bis 12 Monaten umfassend die folgenden Schritte:
(a) Homogenisierung einer Rohmilch,
(b) Erwärmung der zu behandelnden Rohmilch über einen Zeitraum von etwa 2 bis etwa 4 Minuten auf eine Temperatur im Bereich von 94 bis 96 °C, und
(c) Erwärmung der behandelten Milch aus Schritt (b) über einen Zeitraum von etwa 50 bis etwa 400 Sekunden auf eine Temperatur im Bereich von etwa 125 bis 135 °C,
wobei die beiden Schritte (b) und (c) unmittelbar nacheinander und beide durch indirekte Erwärmung durchgeführt werden.

2. Verfahren nach Anspruch 1, **dadurch gekennzeichnet, dass** man die Erwärmung in den Schritten (b) und (c) unabhängig voneinander kontinuierlich oder diskontinuierlich durchführt.

3. Verfahren nach mindestens einem der Ansprüche 1 bis 2, **dadurch gekennzeichnet, dass** man Schritt (c) bei einer Temperatur im Bereich von etwa 125 bis 130 °C durchführt

4. Verfahren nach mindestens einem der Ansprüche 1 bis 3, **dadurch gekennzeichnet, dass** man Schritt (c) über einen Zeitraum von etwa 60 bis 120 Sekunden durchführt.

5. Verfahren nach mindestens einem der Ansprüche 1 bis 4, **dadurch gekennzeichnet, dass** man Temperaturbehandlungen in den Schritten (b) und (c) beide kontinuierlich durchführt.

6. Verfahren nach mindestens einem der Ansprüche 1 bis 5, **dadurch gekennzeichnet, dass** man Schritt (b) kontinuierlich und durch indirekte Erwärmung über einen Zeitraum von 2 bis 4 Minuten bei einer Temperatur im Bereich von 94 bis 96 °C durchführt.

7. Verfahren nach mindestens einem der Ansprüche 1 bis 6, **dadurch gekennzeichnet, dass** man Schritt (c) kontinuierlich und durch indirekte Erwärmung über einen Zeitraum von 60 bis 120 Sekunden bei einer Temperatur im Bereich von 125 bis 130 °C durchführt

8. Verfahren nach mindestens einem der Ansprüche 1 bis 7, **dadurch gekennzeichnet, dass** man Rohmilch einsetzt, die einen Keimgehalt von maximal 100.00 kbE aufweist.

## Claims

1. A method for producing shelf-stable milk having a stability at room temperature of 6 to 12 months comprising the following steps:
(a) homogenising a raw milk,
(b) heating the raw milk to be treated to a temperature in the range of 94 to 96°C for a period of about 2 to about 4 minutes, and
(c) heating the treated milk from step (b) to a temperature in the range of about 125 to 135°C for a period of about 50 to about 400 seconds,
wherein the two steps (b) and (c) are carried out immediately after each other and both by indirect heating.

2. The method according to claim 1, **characterised in that** the heating in steps (b) and (c) is carried out continuously or discontinuously independently of each other.

3. The method according to at least one of claims 1 to 2, **characterized in that** step (c) is carried out at a temperature in the range of about 125 to 130 °C.

4. The method according to at least one of claims 1 to 3, **characterised in that** step (c) is carried out over a period of about 60 to 120 seconds.

5. The process according to at least one of claims 1 to 4, **characterized in that** the temperature treatments in steps (b) and (c) are both carried out continuously.

6. The method according to at least one of claims 1 to 5, **characterized in that** step (b) is carried out continuously and by indirect heating for a period of 2 to 4 minutes at a temperature in the range of 94 to 96 °C.

7. The method according to at least one of claims 1 to 6, **characterized in that** step (c) is carried out continuously and by indirect heating for a period of 60 to 120 seconds at a temperature in the range of 125 to 130°C.

8. The according to at least one of claims 1 to 7, **characterised in that** raw milk is used which has a bacterial content of at most 100,00 cfu.

## Revendications

1. Procédé de production de lait de longue conservation ayant une stabilité à température ambiante de 6 à 12 mois, comprenant les étapes suivantes :
(a) l'homogénéisation d'un lait brut,
(b) le chauffage du lait brut à traiter pendant une durée d'environ 2 à environ 4 minutes à une température dans la plage allant de 94 à 96 °C, et
(c) le chauffage du lait traité de l'étape (b) pendant une durée d'environ 50 à environ 400 secondes à une température dans la plage allant d'environ 125 à 135 °C,
les deux étapes (b) et (c) étant réalisées directement l'une après l'autre et toutes les deux par chauffage indirect.

2. Procédé selon la revendication 1, **caractérisé en ce que** le chauffage dans les étapes (b) et (c) indépendamment l'une de l'autre est réalisé de manière continue ou discontinue.

3. Procédé selon au moins l'une quelconque des revendications 1 à 2, **caractérisé en ce que** l'étape (c) est réalisée à une température dans la plage allant d'environ 125 à 130 °C.

4. Procédé selon au moins l'une quelconque des revendications 1 à 3, **caractérisé en ce que** l'étape (c) est réalisée pendant une durée d'environ 60 à 120 secondes.

5. Procédé selon au moins l'une quelconque des revendications 1 à 4, **caractérisé en ce que** les traitements thermiques dans les étapes (b) et (c) sont tous les deux réalisés de manière continue.

6. Procédé selon au moins l'une quelconque des revendications 1 à 5, **caractérisé en ce que** l'étape (b) est réalisée de manière continue et par chauffage indirect pendant une durée de 2 à 4 minutes à une température dans la plage allant de 94 à 96 °C.

7. Procédé selon au moins l'une quelconque des revendications 1 à 6, **caractérisé en ce que** l'étape (c) est réalisée de manière continue et par chauffage indirect pendant une durée de 60 à 120 secondes à une température dans la plage allant de 125 à 130 °C.

8. Procédé selon au moins l'une quelconque des revendications 1 à 7, **caractérisé en ce que** du lait brut qui présente une teneur en germes d'au plus 100,00 kbE est utilisé.
